# EUROPEAN PATENT APPLICATION

(11) **EP 4 583 616 A1**
(43) Date of publication of application: **09.07.2025**
(21) Application number: 23867276.0
(22) Date of filing: 05.09.2023
(51) Int. Cl.: H04W 72/512

(54) **COMMUNICATION METHOD, NETWORK DEVICE AND TERMINAL DEVICE**

(30) Priority: 22.09.2022 CN 202211159471; 17.10.2022 CN 202211264222
(71) Applicant: Huawei Technologies Co., Ltd., Shenzhen, Guangdong 518129 (CN)
(72) Inventor: HU, Shaoling, Shenzhen, Guangdong 518129 (CN); XU, Haibo, Shenzhen, Guangdong 518129 (CN)
(74) Representative: Maiwald GmbH
(86) International application number: PCT/CN2023/116869
(87) International publication number: WO 2024/060985

(57) **Abstract**

This application provides a communication method. The communication method includes: A terminal device generates a first data packet, and determines whether the first data packet is a last data packet in a first data packet set. The first data packet set is a group of protocol data units PDUs generated by the terminal device in a short time period. If the first data packet is the last data packet in the first data packet set, the terminal device triggers a first buffer status report BSR. In this way, a BSR is triggered when a last data packet in a data packet set is generated, so that the BSR is triggered in a timely manner to ensure timeliness of data transmission.

## Description

This application claims priorities to Chinese Patent Application No. 202211159471.8, filed with the China National Intellectual Property Administration on September 22, 2022 and entitled "BSR TRIGGERING METHOD, TERMINAL DEVICE, NETWORK DEVICE, AND APPARATUS", and to Chinese Patent Application No. 202211264222.5, filed with the China National Intellectual Property Administration on October 17, 2022 and entitled "COMMUNICATION METHOD, NETWORK DEVICE, AND TERMINAL DEVICE", both of which are incorporated herein by reference in their entireties.

### TECHNICAL FIELD

Embodiments of this application relate to the communications field, and specifically, to a communication method, a network device, and a terminal device.

### BACKGROUND

When uplink data arrives, uploading of a buffer status report (buffer status report, BSR) is triggered. After receiving the BSR, a network device allocates an uplink transmission resource to a terminal device based on a size of a data volume reported in the BSR. A problem that a BSR is reported not in a timely manner may occur when a condition, specified in an existing standard, for triggering the BSR (for example, a priority of a logical channel to which uplink data belongs is higher than a priority of a logical channel to which to-be-transmitted data belongs, or no to-be-transmitted data is buffered in any logical channel in any logical channel group) is applied to periodic uplink data (for example, an extended reality (eXtended Reality, XR) service).

Therefore, how to trigger BSR reporting for periodic uplink data becomes an urgent problem to be resolved.

### SUMMARY

Embodiments of this application provide a communication method, so that a BSR is triggered in a timely manner for periodic uplink data.

According to a first aspect, a communication method is provided. The method may be performed by a terminal device, or may be performed by a component (for example, a chip or a circuit) of the terminal device. This is not limited in this application. For ease of description, the following uses an example in which the terminal device performs the method for description.

The communication method includes: The terminal device generates a first data packet. The terminal device determines whether the first data packet is a last data packet in a first data packet set. If the first data packet is the last data packet in the first data packet set, the terminal device triggers a first buffer status report BSR. A data packet included in the first data packet set is generated by the terminal device in a first time period.

Specifically, the first data packet set is a group of protocol data units (Protocol Data Unit, PDU) generated by the terminal device in a short time period, and may be understood as a data burst (data burst). It should be understood that no data packet is generated in a period of time from a moment at which generation of a data burst is completed (for example, a moment at which a last data packet of a data burst is generated) to a moment at which generation of a next data burst starts. In other words, there is an interval between generation of adjacent data bursts in time domain by the terminal device, and a specific interval is not limited in this application.

Based on the foregoing technical solutions, the terminal device may trigger a BSR by determining whether a generated data packet is a last data packet in a data packet set, so that a BSR can be triggered when a last data packet in a data packet set (or a data burst) is generated, thereby triggering the BSR in a timely manner, and ensuring timeliness of uplink data transmission. In addition, because the BSR is triggered when the last data packet in the data packet set is generated, it can be ensured that transmission of all data packets in the data packet set is met when the network device configures an uplink transmission resource based on the BSR.

With reference to the first aspect, in some implementations of the first aspect, if the first data packet is not the last data packet in the first data packet set, the method further includes: The terminal device determines, based on a preset condition, whether to trigger the first BSR. If the preset condition is not met, the terminal device skips triggering the first BSR; or if the preset condition is met, the terminal device triggers the first BSR. The preset condition includes: A priority of a first logical channel to which the first data packet belongs is higher than that of another logical channel in a logical channel group to which the first logical channel belongs, or no data packet is to be uploaded on any other logical channel in a logical channel group to which a first logical channel belongs.

Based on the foregoing technical solutions, when the first data packet generated by the terminal device is not the last data packet in the first data packet set, the terminal device may still determine, based on a preset condition, whether to trigger the BSR. The preset condition is a BSR triggering condition specified in an existing protocol. This improves backward compatibility of the solutions.

With reference to the first aspect, in some implementations of the first aspect, duration between a first moment and a second moment is greater than a threshold, the first moment is a moment at which the last data packet in the first data packet set is generated, the second moment is a moment at which a 1^{st} data packet in a second data packet set is generated, and the first data packet set and the second data packet set are two adjacent data packet sets.

With reference to the first aspect, in some implementations of the first aspect, before the terminal device generates the first data packet, the method further includes: The terminal device receives first indication information from a network device. The first indication information indicates to trigger the first BSR by determining that the first data packet is the last data packet in the first data packet set.

Based on the foregoing technical solutions, the network device may indicate, via the first indication information, a BSR triggering manner of the terminal device, so that the network device has a capability of indicating the BSR triggering manner of the terminal device.

With reference to the first aspect, in some implementations of the first aspect, the first indication information further indicates to trigger a second BSR by determining that a second data packet is a last data packet in a third data packet set. Data included in the first data packet set and data included in the third data packet set are data of a same service type, and a data packet included in the third data packet set is generated by the terminal device in a second time period.

Based on the foregoing technical solutions, the network device may indicate, via the first indication information, a BSR triggering manner corresponding to a plurality of data packet sets of data of a specific service type, so that the network device may indicate a BSR triggering manner by using a service type as a granularity, and does not need to indicate, for each data packet set, to reduce configuration overhead of the network device.

With reference to the first aspect, in some implementations of the first aspect, the service type includes an extended reality XR service.

With reference to the first aspect, in some implementations of the first aspect, that the terminal device determines whether the first data packet is a last data packet in a first data packet set includes: A non-access stratum NAS and/or an access stratum AS of the terminal device determine/determines whether the first data packet is the last data packet in the first data packet set.

With reference to the first aspect, in some implementations of the first aspect, if the NAS and/or the AS of the terminal device determine/determines that the first data packet is the last data packet in the first data packet set, the method further includes: The NAS and/or the AS of the terminal device receive/receives second indication information from an application layer of the terminal device. The second indication information indicates that the first data packet is the last data packet in the first data packet set.

Based on the foregoing technical solutions, when generating the data packet, the application layer of the terminal device may indicate the last data packet via additional indication information, thereby improving accuracy of the solutions.

With reference to the first aspect, in some implementations of the first aspect, that a terminal device generates a first data packet includes: The application layer of the terminal device generates the first data packet, and a header of the first data packet includes the second indication information. Alternatively, the application layer of the terminal device generates the first data packet, and the application layer of the terminal device sends the first data packet and the second indication information to the NAS and/or the AS of the terminal device.

Based on the foregoing technical solutions, when generating the first data packet, the application layer of the terminal device may directly add the second indication information to the header of the first data packet, to indicate that the first data packet is the last data packet. Alternatively, the application layer of the terminal device may send the second indication information when sending the first data packet to the NAS and/or the AS of the terminal device, to indicate that the first data packet is the last data packet. The application layer of the terminal device may indicate the last data packet in different indication manners, thereby improving flexibility of the solutions.

With reference to the first aspect, in some implementations of the first aspect, that a NAS and/or an AS of the terminal device determine/determines whether the first data packet is the last data packet in the first data packet set includes: The NAS and/or the AS of the terminal device determine/determines, based on first information, whether the first data packet is the last data packet in the first data packet set. The first information includes a first data packet set identifier, a total quantity of data packets in the first data packet set, and a quantity of received data packets that carry the first data packet set identifier; and the first data packet set identifier and the total quantity of data packets in the first data packet set are included in a header of the first data packet.

Based on the foregoing technical solutions, the NAS and/or the AS of the terminal device may indirectly determine, based on other information carried in the header of the first data packet and a quantity of received data packets that carry the first data packet set identifier, whether the first data packet is the last data packet in the first data packet set, and the application layer of the terminal device does not need to explicitly indicate, via the second indication information, that the first data packet is the last data packet, thereby reducing complexity of the application layer of the terminal device.

With reference to the first aspect, in some implementations of the first aspect, if the NAS and/or the AS of the terminal device determine/determines that the first data packet is the last data packet in the first data packet set, the method further includes: The NAS and/or the AS of the terminal device send/sends third indication information to a media access control MAC layer of the terminal device. The third indication information indicates the MAC layer of the terminal device to trigger the first BSR.

With reference to the first aspect, in some implementations of the first aspect, that the terminal device triggers a first BSR includes: The MAC layer of the terminal device triggers the first BSR in response to receiving the third indication information.

With reference to the first aspect, in some implementations of the first aspect, the third indication information indicates, by indicating that the first data packet is the last data packet in the first data packet set, the MAC layer of the terminal device to trigger the first BSR.

According to a second aspect, a communication method is provided. The method may be performed by a network device, or may be performed by a component (for example, a chip or a circuit) of the network device. This is not limited in this application. For ease of description, the following uses an example in which the network device performs the method for description.

The communication method includes: The network device sends first indication information to a terminal device. The first indication information indicates to trigger a first buffer status report BSR by determining that a first data packet is a last data packet in a first data packet set. The network device receives the first BSR from the terminal device. A data packet included in the first data packet set is generated by the terminal device in a first time period.

With reference to the second aspect, in some implementations of the second aspect, the first indication information further indicates to trigger a second BSR by determining that a second data packet is a last data packet in a third data packet set; and the method further includes: The network device receives the second BSR from the terminal device. Data included in the first data packet set and data included in the third data packet set are data of a same service type, and a data packet included in the third data packet set is generated by the terminal device in a second time period.

With reference to the second aspect, in some implementations of the second aspect, the service type includes an extended reality XR service.

For technical effects of the method shown in the second aspect and the possible designs of the second aspect, refer to the technical effects in the first aspect and the possible designs of the first aspect.

According to a third aspect, a terminal device is provided. The terminal device is configured to perform any one of the first aspect and the implementations of the first aspect. Specifically, the terminal device includes a processor and a memory. The memory is configured to store a computer program. The processor is configured to invoke the computer program from the memory and run the computer program, to enable the terminal device to perform any one of the first aspect and the implementations of the first aspect.

According to a fourth aspect, a network device is provided. The network device is configured to perform any one of the second aspect and the implementations of the second aspect. Specifically, the network device includes a processor and a memory. The memory is configured to store a computer program. The processor is configured to invoke the computer program from the memory and run the computer program, to enable the network device to perform any one of the second aspect and the implementations of the second aspect.

According to a fifth aspect, a communication apparatus is provided. The communication apparatus is configured to perform the method provided in any one of the first aspect and the implementations of the first aspect or any one of the second aspect and the implementations of the second aspect. Specifically, the communication apparatus may include units and/or modules (for example, a processing unit and a transceiver unit) configured to perform the method provided in any one of the first aspect and the implementations of the first aspect, or the method provided in any one of the second aspect and the implementations of the second aspect.

In an implementation, the communication apparatus is a terminal device. When the communication apparatus is the terminal device, the transceiver unit may be a transceiver or an input/output interface. The processing unit may be at least one processor. Optionally, the transceiver may be a transceiver circuit. Optionally, the input/output interface may be an input/output circuit.

In another implementation, the communication apparatus may be a chip, a chip system, or a circuit in the terminal device. In this case, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, this application provides a processor, configured to perform the method provided in the first aspect or the second aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a seventh aspect, a computer-readable storage medium is provided. The computer-readable storage medium stores a computer program. When the computer program runs on a communication apparatus, the communication apparatus is enabled to perform the method in any one of the implementations of the first aspect or the second aspect.

According to an eighth aspect, a computer program product including instructions is provided. When the computer program product runs on a computer, the computer is enabled to perform the method provided in any one of the implementations of the first aspect or the second aspect.

According to a ninth aspect, a chip is provided. The chip includes a processor and a communication interface. The processor reads instructions through the communication interface, to perform the method provided in any one of the implementations of the first aspect or the second aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any one of the implementations of the first aspect or the second aspect.

According to a tenth aspect, a communication system is provided, including the terminal device in the third aspect and the network device in the fourth aspect.

### BRIEF DESCRIPTION OF DRAWINGS

FIG. 1 is a diagram of a communication system applicable to this application;
FIG. 2 is a diagram of a protocol layer structure between a network device and a terminal device;
(a) to (c) in FIG. 3 are diagrams in which data arrives at a protocol layer of a terminal device according to this application;
FIG. 4 is a diagram of reporting a BSR not in a timely manner;
FIG. 5 is a schematic flowchart of a communication method according to this application;
FIG. 6 is a block diagram of a communication apparatus 10 according to an embodiment of this application;
FIG. 7 is a diagram of another communication apparatus 20 according to an embodiment of this application; and
FIG. 8 is a diagram of a chip system 30 according to an embodiment of this application.

### DESCRIPTION OF EMBODIMENTS

The following describes technical solutions in embodiments of this application in detail with reference to the accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

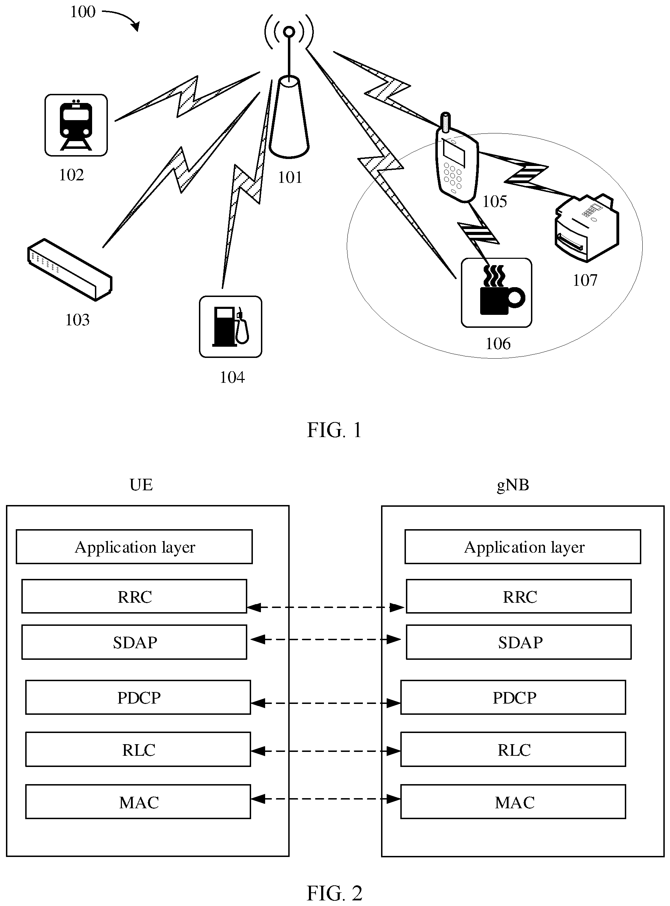

For ease of understanding embodiments of this application, for example, a communication system applicable to this application is first described with reference to FIG. 1. A terminal device (terminal equipment) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), a terminal device in a future internet of vehicles, or the like. This is not limited in embodiments of this application.

For example, in embodiments of this application, the wearable device may also be referred to as a wearable intelligent device, and is a general term of wearable devices developed by intelligently designing daily wear by using a wearable technology, such as glasses, gloves, watches, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured device that may implement complete or partial functions without depending on a smartphone, for example, a smartwatch or smart glasses. In addition, the device may alternatively be a portable device that is dedicated to only one type of application function and needs to be used together with another device such as a smartphone, for example, various smart bands or smart jewelry for monitoring physical signs.

In addition, in embodiments of this application, the terminal device may alternatively be a terminal device in an IoT system. IoT is an important part in future development of information technologies. A main technical feature of the IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrowband (narrowband, NB) technology.

In addition, in embodiments of this application, the terminal device may further include a sensor. Main functions of the terminal device include collecting data (from some terminal devices), receiving control information and downlink data from a network device, sending an electromagnetic wave, and transmitting uplink data to the network device.

The network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), a gNB in a 5G system, for example, an NR system, a transmission point (TRP or TP), one antenna panel or a group of antenna panels (including a plurality of antenna panels) of a base station in a 5G system, or a network node that constitutes a gNB or a transmission point, for example, a baseband unit (BBU) or a distributed unit (distributed unit, DU).

The network device and the terminal device may be deployed on the land, including an indoor device, an outdoor device, a hand-held device, or a vehicle-mounted device; may be deployed on the water; or may be deployed on an airplane, a balloon, and a satellite in the air. Scenarios in which the network device and the terminal device are located are not limited in embodiment of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux^{®} operating system, a Unix^{®} operating system, an Android^{®} operating system, an iOS^{®} operating system, or a Windows^{®} operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium includes but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable storage media" may include but is not limited to a radio channel, and various other media that can store, include, and/or carry instructions and/or data.

For ease of understanding embodiments of this application, a communication system shown in FIG. 1 is first used as an example to describe in detail a communication system applicable to embodiments of this application. As shown in FIG. 1, the communication system 100 may include at least one network device 101 and at least one of terminal devices 102 to 107. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device to device (device to device, D2D) technology. As shown in FIG. 1, direct communication may be performed between terminal devices 105 and 106 and between terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, the terminal devices 105 to 107 may directly communicate with the network device 101. For example, the terminal devices 105 and 106 in the figure may directly communicate with the network device 101. Alternatively, the terminal devices 105 to 107 may indirectly communicate with the network device 101. For example, the terminal device 107 in FIG. 1 communicates with the network device 101 through the terminal device 105.

A plurality of antennas may be disposed for each communication device. For each communication device in the communication system 100, the disposed plurality of antennas may include at least one transmit antenna configured to send a signal and at least one receive antenna configured to receive a signal. Therefore, communication devices in the communication system 100 may communicate with each other by using a multi-antenna technology.

An interface between the network device and the terminal device may be a Uu interface (or referred to as an air interface). Certainly, in future communication, names of these interfaces may remain unchanged, or may be replaced by other names. This is not limited in this application. For example, communication between the network device and the terminal device complies with a specific protocol layer structure. Network layering means that work such as sending, forwarding, packaging, or unpacking data of a network node (for example, the network device and the terminal device), and loading or unpacking control information is respectively implemented by different hardware and software modules. In this way, a complex problem of communication and network interconnection can be simplified. For ease of understanding, the protocol layer structure between the network device and the terminal device in embodiments of this application is briefly described with reference to FIG. 2.

It can be learned from FIG. 2 that network layer division of the network device and the terminal device includes an application layer, an RRC layer, an SDAP layer, a PDCP layer, an RLC layer, and a media access control (Media Access Control, MAC) layer. In addition, for the terminal device, a protocol layer may be further divided into a non-access stratum (Non-Access Stratum, NAS) and an access stratum (Access Stratum, AS). The RRC layer and a protocol layer below the RRC layer are referred to as the access stratum, and a functional layer between the RRC layer and a core network device (for example, AMF) is referred to as the non-access stratum.

A main function of the application layer is to provide a plurality of services, such as a file server, a database service, an email, and another network software service, for application software. Functions implemented by the RRC layer include establishing, maintaining, and releasing an RRC connection, and allocating or reconfiguring a radio resource used for the RRC connection. One of functions of the SDAP layer is mapping between a quality of service (Quality of Service) flow and a data radio bearer (data radio bearer, DRB). The PDCP layer is responsible for compressing and decompressing an IP header, maintaining a PDCP layer sequence number, performing encryption and decryption, and the like. The RLC layer mainly provides a radio link control function, and provides services such as segmentation, retransmission control, and on-demand sending for an upper layer. Functions of the MAC layer include mapping between a logical channels and transport channels, and selecting an appropriate transport format for each transport channel.

It should be noted that the network layer division of the terminal device and the network device is not limited in embodiments of this application. FIG. 2 is merely an example, and does not constitute any limitation on the protection scope of this application.

It should be understood that FIG. 1 is merely a simplified diagram of an example for ease of understanding. The communication system 100 may further include another network device or may further include another terminal device (not shown in FIG. 1). For example, the communication system 100 may further include a core network device. An access network device provides a radio access connection for the terminal device, and may send data to the terminal device or receive data sent by the terminal device. In addition, the access network device is also connected to the core network device, and may forward, to the core network, the data received from the terminal device, or receive, from the core network, data that needs to be sent to the terminal device.

For ease of understanding embodiments of this application, some basic concepts in this application are briefly described. It should be understood that the basic concepts described below are described by using basic concepts specified in an NR protocol as an example, but embodiments of this application are not limited to being applied only to an NR system. Therefore, standard names appearing when the NR system is used as an example for description are all functional descriptions, and specific names are not limited, indicate only functions of a device, and may be correspondingly extended to another future system.
1. Extended reality (eXtended Reality, XR): The extended reality includes virtual reality (Virtual Reality, VR), augmented reality (Augmented Reality, AR), mixed reality (Mixed Reality, MR), and the like, and is one of the most attractive applications for a future 5G network. An XR application provides a virtual immersive world for a user by providing audio and video signals.

Video transmission has a frame probability and a slice probability. A frame of image may be understood as a complete picture, and a slice may be understood as several parts obtained by dividing a complete picture.

According to a video coding standard (High Efficiency Video Coding, HEVC), a frame of image is divided into different slices in four different ways: regular slice (regular slice), dependent slice (dependent slice), tile (tile), and wavefront parallel processing (wavefront parallel processing).

The regular slice mainly facilitates parallel processing. Reconstruction after encoding of a regular slice of a frame does not need to depend on other slices in the frame of picture, and therefore does not require information exchange between different picture processors. Because of header overhead of a data packet of a slice and no use of predictive coding, use of a regular slice significantly increases a data volume after encoding. However, an advantage of using a regular slice is that time for processing a frame of picture is shortened, and a size of a processed slice is convenient to match a size of a maximum transfer unit (maximum transfer unit, MTU).

A header of a data packet of the dependent slice is short, and a size of the data packet can be reduced by using the inter-picture reference. When a dependent slice is used, to shorten an end-to-end delay at an application layer, some encoded data may be first sent before the entire slice is encoded.

During wavefront parallel processing, an image is divided into single-row coding tree units (coding tree units, CTUs). Data from other coding tree units may be used for entropy coding and predictive coding of one unit. Parallel processing is possibly performed on coding tree unit rows. When the target coding tree unit is decoded, it needs to be ensured that a CTU associated with the target coding tree unit is decoded.

Tiles divide a picture into columns and rows in horizontal and vertical dimensions. Different tiles are encoded and processed in a sequence of specific CTU rasters. Dependency of predictive and entropy coding in the picture is also considered in tile processing.

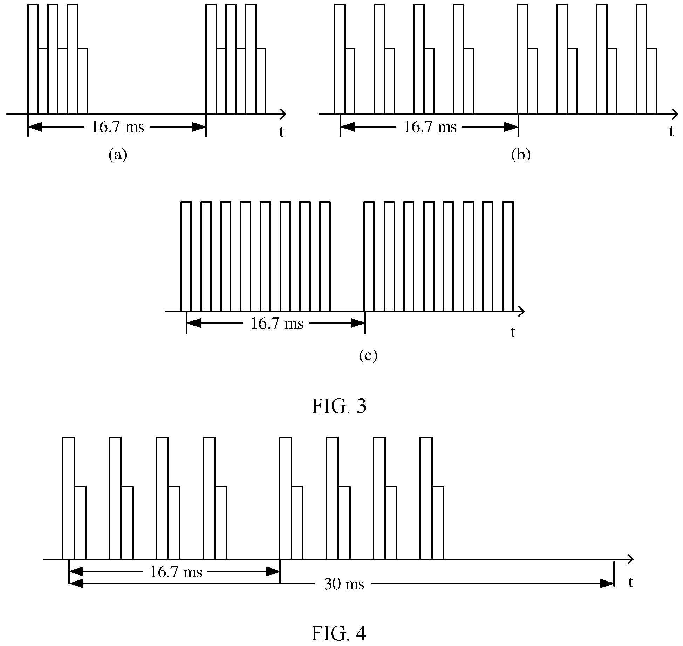

It can be learned from the foregoing four picture processing manners that, there are three different manners shown in (a) to (c) in FIG. 3 for a data stream of data of a frame of picture to arrive at an air interface protocol layer of the terminal device. The regular slice is shown in (a) in FIG. 3. After being processed in parallel by different processors, one frame of data reaches a protocol layer of the terminal device almost at the same time. The reference slice is shown in (b) in FIG. 3. A frame of data is divided into several slices for arriving, and there is a specific time interval between moments at which data of each slice arrives at a protocol layer of the terminal device. The tile or wavefront parallel processing is shown in (c) in FIG. 3, and data arrives at an air interface protocol layer of the terminal device within a period of time.

2. Protocol data unit (Protocol Data Unit, PDU): The protocol data unit is a specific data frame format indicating that a PDU is created at each layer of a transmission system in a hierarchical network structure. The PDU includes information from an upper layer and additional information from an entity at a current layer. The PDU is to be transmitted to a next lower layer.

3. Protocol data unit set (Protocol Data Unit set, PDU set): A PDU set includes one or more PDUs, and is information about a unit generated by an application layer. The information about the unit may refer to a frame (frame) or a slice (slice) in an XR media service.

4. Data burst (data burst): A data burst is a group of PDUs generated by an application layer in a short period of time. A data burst may be formed by one or more PDU sets. In this application, a group of PDUs included in a data burst may be referred to as a data packet set.

5. Signaling of an end of burst indication (End of Burst Indication, EOBI): In a downlink direction, for a periodic service (for example, an XR service), no data arrives at the network device in a period of time from a moment at which a data burst arrives at the network device to a moment at which a next period starts. In this time period, enabling the terminal device to be in a discontinuous reception on (ON) state is a waste of energy of the terminal device. Therefore, in 3GPP TR 23.700-60, the EOBI is proposed, and an EOBI indication has the following features:
(1) A user plane function (user plane function, UPF) network element notifies, by adding EOBI signaling to a GPRS tunneling protocol for a user plane (GPRS Tunneling Protocol for the User plane, GTP-U) header, the network device that a data packet is a last data packet of a data burst.
(2) The UPF may identify a last data packet of a data burst based on information such as a period of arrival of the data packet, or based on explicit indication information of an application server, and determine to add an EOBI indication to a GTP-U header of the data packet.
(3) After identifying the EOBI signaling from the GTP-U header of the data packet, the network device sends an instruction to enable the terminal device to enter a sleep state, to reduce energy consumption of the terminal device.

6. Buffer status report (buffer status report, BSR): When uplink data arrives, the terminal device triggers uploading of BSR signaling. The BSR is mainly used to report, to the network device, a quantity of data that needs to be uploaded in a buffer at a PDCP/RLC layer of the UE. After receiving the BSR signaling, the network device allocates an uplink transmission resource to the terminal device based on a size of a data volume reported in the BSR. The BSR uploaded by the terminal device to the network device includes but is not limited to the following types: a regular BSR (regular), a padding BSR (padding BSR), a periodic BSR (periodic BSR), and the like. For the padding BSR, the BSR is transmitted by using a redundant uplink transmission resource, and for the periodic BSR, the BSR is triggered by using a timer (Timer) that is periodically started. The padding BSR and the periodic BSR are used as a supplement to the regular BSR, so that the BSR can be reported in a timely manner.

Because the uplink resource needs to be allocated by the network device, the BSR is reported to the network device in a timely and accurate manner, which helps shorten a transmission time period of uplink data. Currently, for triggering of a regular BSR, a condition stipulated in the standard includes: When there is uplink data on a logical channel belonging to a logical channel group (logical channel group, LCG) needs to be transmitted,
(1) if a priority of the logical channel to which the uplink data belongs is higher than a priority of a logical channel to which to-be-transmitted data belongs,
(2) if no to-be-transmitted data is buffered in any logical channel in any logical channel group,
   a regular BSR is triggered. After the regular BSR is triggered, if there is no uplink resource for uploading the BSR, an uplink scheduling request (scheduling request, SR) is triggered. After receiving the SR, the network device allocates a resource to the terminal device to upload the regular BSR.

7. PDU set sequence number (PDU set sequence number, PS-SN): The PDU set sequence number indicates information about a PDU set.

In addition, to facilitate understanding of embodiments of this application, the following several descriptions are provided.

First, in this application, "indicate" may include "directly indicate" and "indirectly indicate". When a piece of indication information is described to indicate A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by sending configuration information to a receiving end device by a transmitting end device. For example, the configuration information may include, but is not limited to, one or a combination of at least two of radio resource control signaling, MAC layer signaling, and physical layer signaling. The radio resource control signaling includes, for example, RRC signaling. The MAC layer signaling includes, for example, a MAC control element (control element, CE). The physical layer signaling includes, for example, DCI.

Second, "at least one" shown in this application means one or more, and "a plurality of" means two or more. In addition, in embodiments of this application, "first", "second", and various numerical numbers (for example, "#1" and "#2") are merely used for differentiation for ease of description, and are not used to limit the scope of embodiments of this application. Sequence numbers of the following processes do not mean execution sequences. The execution sequences of the processes should be determined based on functions and internal logic of the processes, and should not be construed as any limitation on the implementation processes of embodiments of this application. It should be understood that objects described in such a manner are interchangeable in proper cases, to describe solutions other than embodiments of this application. In addition, in embodiments of this application, words such as "510" and "520" are merely identifiers for ease of description, and do not limit a sequence of performing steps.

Third, in this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a related concept in a specific manner.

Fourth, "store" in embodiments of this application may mean that being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited in this application.

Fifth, the "protocol" in embodiments of this application may refer to standard protocols in the communication field, for example, may include an LTE protocol, an NR protocol, and a related protocol applied to a future communication system. This is not limited in this application.

Sixthly, in embodiments of this application, "in a case of", "when", and "if" may be used interchangeably sometimes. It should be noted that, when a difference between the three is not emphasized, meanings to be expressed are consistent.

Seventh, in embodiments of this application, terms and English acronyms and abbreviations, such as radio resource control (RRC), are all examples provided for ease of description, and should not constitute any limitation on this application. This application does not exclude a possibility of defining another term that can implement a same or similar function in an existing or a future protocol.

Eighth, the term "and/or" in this specification is merely an association relationship for describing associated objects, and indicates that three relationships may exist. For example, A and/or B may indicate the following three cases: Only A exists, both A and B exist, and only B exists. In addition, the character "/" in this specification generally indicates an "or" relationship between the associated objects.

With reference to FIG. 1, the foregoing briefly describes a scenario to which the communication method provided in the embodiments of this application can be applied, describes a basic concept that may be used in the embodiments of this application, and describes an existing BSR triggering manner in the basic concept. Specifically, when the BSR triggering manner is applied to periodic uplink data (for example, an XR service), a BSR is reported not in a timely manner.

For example, if the frame rate at which the XR service data arrives is 60 fps, that is, 60 frames arrive within one second, the frame arrival period is 16.7 ms. An allowed transmission delay of uplink data is long, for example, 30 ms. As shown in FIG. 4, FIG. 4 is a diagram of reporting a BSR not in a timely manner. It can be seen from FIG. 4 that, when a new frame of data arrives, data of a previous frame in a buffer is not completely transmitted and cannot be cleared from the buffer due to timeout. When the new frame of data arrives, if any condition for triggering a regular BSR is not met, the regular BSR cannot be triggered, and finally, an uplink resource cannot be scheduled by the network device for the new frame of data in a timely manner, resulting in a delay in data transmission.

To resolve a current problem in BSR triggering, this application provides a communication method, to implement timely BSR triggering by triggering a BSR for a last data packet in a data packet set.

It should be understood that the communication method provided in embodiments of this application may be applied to a system in which communication is performed by using a multi-antenna technology, for example, the communication system 100 shown in FIG. 1. The communication system may include at least one network device and at least one terminal device. The network device may communicate with the terminal device by using the multi-antenna technology.

It should be further understood that a specific structure of an execution body of the method provided in embodiments of this application is not specifically limited in the following embodiments, provided that communication can be performed according to the method provided in embodiments of this application by running a program that records code of the method provided in embodiments of this application. For example, the execution body of the method provided in embodiments of this application may be a terminal device, or may be a functional module that can invoke a program and execute the program in the terminal device.

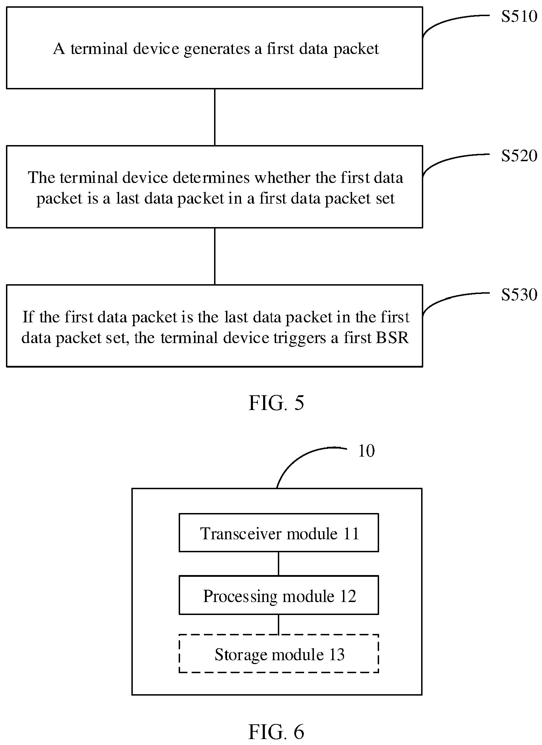

FIG. 5 is a schematic flowchart of a communication method according to this application. The method includes the following steps.

S510: A terminal device generates a first data packet.

Specifically, the first data packet is a data packet in a first data packet set. The data packet included in the first data packet set is generated by the terminal device in a first time period.

In a possible implementation, the first data packet set in this embodiment may be understood as a data burst described above, and a data packet included in the first data packet set may be understood as a PDU included in the data burst. In other words, the first data packet set is a group of PDUs generated by the terminal device in a short time period, and may be understood as a data burst. No data packet is generated in a period of time from a moment at which generation of a data burst is completed (for example, a moment at which a last data packet of a data burst is generated) to a moment at which generation of a next data burst starts (for example, a moment at which a 1^{st} data packet of a data burst is generated). In other words, there is an interval between generation of adjacent data bursts in time domain by the terminal device, and a specific interval is not limited in this application (for example, the interval may be 2 ms).

For example, the terminal device continuously generates two data packet sets (a first data packet set and a second data packet set) in time domain. Duration between a first moment and a second moment is greater than a threshold, the first moment is a moment at which the last data packet in the first data packet set is generated, and the second moment is a moment at which a 1^{st} data packet in the second data packet set is generated. The first data packet set and the second data packet set are two adjacent data packet sets, and the terminal device first generates the first data packet set and then generates the second data packet set.

In another possible implementation, the first data packet set in this embodiment may be understood as a frame of image data.

In still another possible implementation, the first data packet set in this embodiment may be understood as uplink data with a delay constraint.

It should be understood that a specific form of the first data packet set is not limited in this embodiment, and the first data packet set may be any uplink data that needs to be transmitted.

Specifically, that a terminal device generates a first data packet includes: An application layer of the terminal device generates the first data packet.

In this embodiment, after generating the first data packet, the terminal device may trigger a first BSR by determining whether the first data packet is a last data packet in the first data packet set. The method procedure shown in FIG. 5 further includes the following step.

S520: The terminal device determines whether the first data packet is the last data packet in the first data packet set.

Specifically, that the terminal device determines whether the first data packet is the last data packet in the first data packet set includes:
A NAS and/or an AS of the terminal device determine/determines whether the first data packet is the last data packet in the first data packet set.

In this embodiment, that a NAS and/or an AS of the terminal device determine/determines whether the first data packet is the last data packet in the first data packet set includes but is not limited to the following two manners.

Manner 1: That a NAS layer and/or an AS layer of the terminal device determine/determines that the first data packet is the last data packet in the first data packet set includes:
The NAS layer and/or the AS layer of the terminal device determine/determines, based on second indication information sent by the application layer of the terminal device, that the first data packet is the last data packet in the first data packet set.

In this implementation, the application layer of the terminal device sends the second indication information to the NAS layer and/or the AS layer of the terminal device.

Specifically, the second indication information indicates that the first data packet is the last data packet in the first data packet set.

In a possible implementation, the second indication information is information added by the application layer of the terminal device to the first data packet.

Specifically, in this implementation, the second indication information is that the application layer of the terminal device adds the second indication information to the last data packet in the first data packet set, and the second indication information indicates the last data packet.

For example, the first data packet set includes three data packets: a data packet #1, a data packet #2, and a data packet #3. A sequence of the data packet #1, the data packet #2, and the data packet #3 in the data burst is the data packet #1, the data packet #2, and the data packet #3. In other words, the data packet #1 is a 1^{st} data packet in the first data packet set, and the data packet #3 is a last data packet in the first data packet set. In this case, the application layer of the terminal device adds the second indication information to the data packet #3, indicating that the data packet #3 is the last data packet in the first data packet set.

For example, the second indication information is EOBI signaling.

In this implementation, the application layer of the terminal device may use a preset bit in an existing protocol layer to indicate the last data packet in the data packet set. For example, the application layer of the terminal device may use M bits in a format of an RTP header defined in RFC 3550 in Table 1 to indicate the last data packet in the first data packet set.

**Table 1**

| | | | | | | | | | | | | | | | | | | | | | | | | | | | | | | | |
|---|---|---|---|---|---|---|---|---|---|---|---|---|---|---|---|---|---|---|---|---|---|---|---|---|---|---|---|---|---|---|---|
| 0 | | | | | | | | | | 1 | | | | | | | | | | 2 | | | | | | | | | | 3 | |
| 0 | 1 | 2 | 3 | 4 | 5 | 6 | 7 | 8 | 9 | 0 | 1 | 2 | 3 | 4 | 5 | 6 | 7 | 8 | 9 | 0 | 1 | 2 | 3 | 4 | 5 | 6 | 7 | 8 | 9 | 0 | 1 |
| V=2 | | P | X | CC | | | | M | PT | | | | | | | Sequence number | | | | | | | | | | | | | | | |
| Timestamp (timestamp) | | | | | | | | | | | | | | | | | | | | | | | | | | | | | | | |
| Synchronization source identifier (synchronization source (SSRC) identifier) | | | | | | | | | | | | | | | | | | | | | | | | | | | | | | | |
| Contributing source identifier (contributing source (CSRC) identifier) | | | | | | | | | | | | | | | | | | | | | | | | | | | | | | | |
| ... | | | | | | | | | | | | | | | | | | | | | | | | | | | | | | | |

In another possible implementation, the second indication information is information that the application layer of the terminal device sends to the NAS layer and/or the AS layer of the terminal device along with the first data packet sent by the application layer of the terminal device.

For example, after perceiving that the first data packet is the last data packet in the first data packet set, the application layer of the terminal device does not add EOBI signaling to the last data packet, but directly sends an instruction to the NAS layer and/or the AS layer along with an indication that the first data packet is the last data packet in the first data packet set.

Manner 2: The NAS and/or the AS of the terminal device determine/determines, based on first information, whether the first data packet is the last data packet in the first data packet set. The first information includes a first data packet set identifier, a total quantity of data packets in the first data packet set, and a quantity of received data packets that carry the first data packet set identifier; and the first data packet set identifier and the total quantity of data packets in the first data packet set are included in a header of the first data packet.

In this implementation, the application layer of the terminal device does not explicitly indicate the last data packet in the first data packet set via the second indication information, and the NAS and/or the AS of the terminal device do/does not need to additionally read the second indication information to learn whether the first data packet is the last data packet in the first data packet set. The NAS layer and/or the AS layer of the terminal device determine/determines, based on information carried in a header of a data packet sent by the application layer of the terminal device, whether the data packet is the last data packet in the data packet set.

For example, the NAS and/or the AS of the terminal device receive/receives the first data packet, and the header of the first data packet carries a first data packet set identifier and a total quantity of data packets in the first data packet set. For example, the header of the first data packet carries the first data packet set identifier "#1", and the total quantity of data packets in the first data packet set is 10. The NAS and/or the AS of the terminal device may determine, based on a quantity (for example, 10) of received data packets that carry the identifier "#1", that the first data packet is the last data packet in the first data packet set.

For example, in Manner 2, the first data packet set may be understood as a PDU set, and the first data packet set identifier may be understood as a PDU set SN.

It should be understood that the foregoing is merely an example for describing how the NAS and/or the AS of the terminal device determine/determines whether a data packet is a last data packet in a data packet set, and does not constitute any limitation on the protection scope of this application. The NAS and/or the AS of the terminal device may alternatively determine which data packet is the last data packet in the data packet set in another manner, for example, based on historical communication data, or based on an indication of a management device. Examples are not described herein again one by one.

In this embodiment, after the terminal device determines whether the first data packet is the last data packet in the first data packet set, the terminal device may further determine, based on a determining result, whether to trigger the first BSR. The method procedure shown in FIG. 5 further includes the following step.

S530: If the first data packet is the last data packet in the first data packet set, the terminal device triggers the first BSR.

For example, if the NAS and/or the AS of the terminal device determine/determines that the first data packet is the last data packet in the first data packet set, in this implementation, the terminal device triggers the first BSR. This specifically includes:
The NAS and/or the AS of the terminal device send/sends third indication information to a MAC layer of the terminal device. The third indication information indicates the MAC layer of the terminal device to trigger the first BSR.

Optionally, the third indication information indicates, by indicating that the first data packet is the last data packet in the first data packet set, the MAC layer of the terminal device to trigger the first BSR. For example, the third indication information is an EOBI.

In a possible implementation, when receiving, from the application layer of the terminal device, a data packet that is mapped from an Internet Protocol (Internet Protocol, IP) quintuple to a QoS flow (flow), the NAS layer of the terminal device allocates a QoS flow index (QoS flow index, QFI) to each data packet. When the NAS layer of the terminal device identifies an IP quintuple in each data packet, the NAS layer also identifies M bits in an RTP header. If it is identified that the data packet is the last data packet in the data packet set, the NAS layer of the terminal device sends an EOBI indication and a QFI indication together with an uplink data packet to the AS layer of the terminal device. Specifically, the EOBI indication is sent to the MAC layer of the terminal device, to indicate the MAC layer of the terminal device to trigger the first BSR.

In another possible implementation, when a data packet is transmitted to the AS layer of the terminal device (for example, an SDAP layer of the terminal device or a PDCP layer of the terminal device), an SDAP entity of the terminal device or a PDCP entity of the terminal device detects M bits in an RTP header. If the SDAP entity of the terminal device or the PDCP entity of the terminal device identifies that the data packet is a last data packet in a data packet set, the SDAP entity of the terminal device or the PDCP entity of the terminal device sends an EOBI indication to the MAC layer of the terminal device, to indicate the MAC layer of the terminal device to trigger the first BSR.

In still another possible implementation, after receiving the EOBI indication, the NAS layer of the terminal device or the AS layer of the terminal device directly forwards the EOBI indication to the MAC layer of the terminal device, to indicate the MAC layer of the terminal device to trigger the first BSR.

It should be understood that the foregoing several implementations are merely examples for describing how the third indication information indicates the MAC layer of the terminal device to trigger the first BSR, and do not constitute any limitation on the protection scope of this application. Another manner of determining that the first data packet is the last data packet in the first data packet set and indicating the MAC layer of the terminal device to trigger the first BSR also falls within the protection scope of this application.

Further, after receiving the third indication information, the MAC layer of the terminal device triggers the first BSR in response to receiving the third indication information. In this embodiment, how the MAC layer of the terminal device generates the first BSR and how the MAC layer of the terminal device sends the first BSR to a network device are not specifically described. For details, refer to descriptions about generating and sending a BSR by a terminal device in an existing BSR technology. This embodiment mainly relates to how the MAC layer of the terminal device triggers a BSR.

Step S530 mainly describes a case in which the terminal device determines that the first data packet is the last data packet in the first data packet set. For example, if the first data packet is not the last data packet in the first data packet set, the terminal device may determine, based on a preset condition, whether to trigger the first BSR.

If the preset condition is not met, the terminal device skips triggering the first BSR; or if the preset condition is met, the terminal device triggers the first BSR. The preset condition includes: A priority of a first logical channel to which the first data packet belongs is higher than a priority of a logical channel to which to-be-transmitted data belongs, or no to-be-transmitted data is buffered in any logical channel in any logical channel group. In other words, in this embodiment, when determining that the first data packet is not the last data packet in the first data packet set, the terminal device may still determine, based on a BSR triggering manner defined in an existing protocol, whether to trigger the BSR, thereby ensuring backward compatibility of this application.

In addition, it should be noted that, in this embodiment, a manner of triggering the BSR by the terminal device (whether to trigger the BSR is determined based on whether the data packet is the last data packet in the data packet set) may be a manner of triggering the BSR predefined in a protocol, or may be configured by the network device.

For example, the network device sends first indication information to the terminal device. The first indication information indicates to trigger the first BSR by determining that the first data packet is the last data packet in the first data packet set.

The first indication information may indicate a BSR triggering manner corresponding to a plurality of data packet sets of data of a specific service type. For example, the first indication information further indicates to trigger a second BSR by determining that a second data packet is a last data packet in a third data packet set. Data included in the first data packet set and data included in the third data packet set are data of a same service type, and a data packet included in the third data packet set is generated by the terminal device in a second time period.

In a possible implementation, the first indication information sent by the network device may correspond to a logical channel. In other words, when transmitting uplink data on the logical channel, the terminal device may determine, based on the BSR triggering manner indicated by the first indication information, whether to trigger a BSR.

In another possible implementation, the first indication information sent by the network device may correspond to a service type. In other words, when uploading data of the service type, the terminal device may determine, based on the BSR triggering manner indicated by the first indication information, whether to trigger a BSR.

According to the communication method shown in FIG. 5, the terminal device may trigger a BSR by determining whether a generated data packet is a last data packet in a data packet set, so that a BSR can be triggered when a last data packet in a data packet set (or a data burst) is generated, thereby triggering the BSR in a timely manner, and ensuring timeliness of uplink data transmission. In addition, because the BSR is triggered when the last data packet in the data packet set is generated, it can be ensured that transmission of all data packets in the data packet set is met when the network device configures an uplink transmission resource based on the BSR.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in a conventional network architecture is mainly used as an example for description (for example, a network device and a terminal device). It should be understood that a specific form of the device is not limited in embodiments of this application. For example, all devices that can implement a same function in the future are applicable to embodiments of this application.

It may be understood that in the foregoing method embodiments, the methods and the operations implemented by the device (for example, the network device or the terminal device) may also be implemented by a component (for example, a chip or a circuit) of the device.

The foregoing describes in detail, with reference to FIG. 5, the communication method provided in embodiments of this application. The foregoing communication method is mainly described from a perspective of interaction between protocol layers of the terminal device. It may be understood that, to implement the foregoing functions, the terminal device includes corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail, with reference to FIG. 6 to FIG. 8, the communication apparatus provided in this application. It should be understood that descriptions of the apparatus embodiments correspond to the descriptions of the method embodiments. Therefore, for content that is not described in detail, refer to the foregoing method embodiments. For brevity, some content is not described again.

In embodiments of this application, functional modules of the transmitting end device or the receiving end device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into modules is an example, and is merely a logical function division. During actual implementation, another division manner may be used. Descriptions are provided below by using an example in which each functional module is obtained through division based on each function.

FIG. 6 is a block diagram of a communication apparatus 10 according to an embodiment of this application. The apparatus 10 includes a transceiver module 11 and a processing module 12. The transceiver module 11 may implement a corresponding communication function, and the processing module 12 is configured to perform data processing. Alternatively, the transceiver module 11 is configured to perform receiving and sending related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of the device in the foregoing method embodiments.

In a first design, the apparatus 10 may correspond to the terminal device in the foregoing method embodiments, or may be a component (for example, a chip) of the terminal device.

The apparatus 10 may implement corresponding steps or procedures performed by the terminal device in the foregoing method embodiments. The transceiver module 11 may be configured to perform receiving and sending related operations of the terminal device in the foregoing method embodiments. The processing module 12 may be configured to perform processing related operations of the terminal device in the foregoing method embodiments.

In a possible implementation, the processing module 12 is configured to generate a first data packet; and the processing module 12 is further configured to determine whether the first data packet is a last data packet in a first data packet set; and if the first data packet is the last data packet in the first data packet set, the processing module 12 triggers a first buffer status report BSR. A data packet included in the first data packet set is generated by the terminal device in a first time period.

Optionally, if the first data packet is not the last data packet in the first data packet set, the processing module 12 determines, based on a preset condition, whether to trigger the first BSR. If the preset condition is not met, the processing module 12 does not trigger the first BSR; or if the preset condition is met, the processing module 12 triggers the first BSR. The preset condition includes: A priority of a first logical channel to which uplink data belongs is higher than a priority of a logical channel to which to-be-transmitted data belongs, or no to-be-transmitted data is buffered in any logical channel in any logical channel group.

Optionally, before the processing module 12 generates the first data packet, the transceiver module 11 is configured to receive first indication information from the network device. The first indication information indicates to trigger the first BSR by determining that the first data packet is the last data packet in the first data packet set.

When the apparatus 10 is configured to perform the method in FIG. 5, the transceiver module 11 may be configured to perform the steps of sending and receiving information in the method, and the processing module 12 may be configured to perform processing steps in the method, for example, steps S510, S520, and S530.

It should be understood that a specific process in which the units perform the foregoing corresponding steps is described in detail in the foregoing method embodiments, and for brevity, details are not described herein.

In another design, the apparatus 10 may correspond to the network device in the foregoing method embodiments, or may be a component (for example, a chip) of the network device.

The apparatus 10 may implement corresponding steps or procedures performed by the network device in the foregoing method embodiments. The transceiver module 11 may be configured to perform receiving and sending related operations of the network device in the foregoing method embodiments. The processing module 12 may be configured to perform processing related operations of the network device in the foregoing method embodiments.

In a possible implementation, the transceiver module 11 is configured to send first indication information to a terminal device. The first indication information indicates to trigger a first buffer status report BSR by determining that a first data packet is a last data packet in a first data packet set. The transceiver module 11 receives the first BSR from the terminal device. A data packet included in the first data packet set is generated by the terminal device in a first time period.

It should be understood that a specific process in which the units perform the foregoing corresponding steps is described in detail in the foregoing method embodiments, and for brevity, details are not described herein.

It should also be understood that the apparatus 10 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described functions. In an optional example, a person skilled in the art may understand that the apparatus 10 may be specifically a mobility management network element in the foregoing embodiments, and may be configured to perform procedures and/or steps corresponding to the mobility management network element in the foregoing method embodiments. Alternatively, the apparatus 10 may be specifically the terminal device in the foregoing embodiments, and may be configured to perform procedures and/or steps corresponding to the terminal device in the foregoing method embodiments. To avoid repetition, details are not described herein again.

The apparatus 10 in each of the foregoing solutions has a function of implementing corresponding steps performed by a device (for example, the terminal device or the network device) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform sending and receiving operations and a related processing operation in the method embodiments.

In addition, the transceiver module 11 may alternatively be a transceiver circuit (for example, may include a receiver circuit and a transmitter circuit), and the processing module may be a processing circuit.

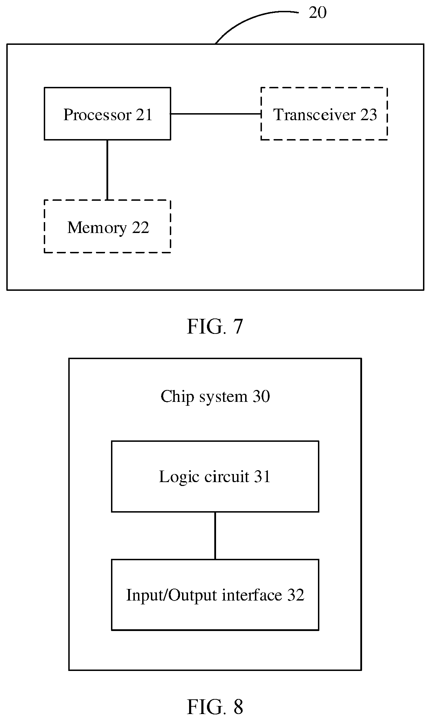

FIG. 7 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the method in the foregoing method embodiments. Optionally, there are one or more processors 21.

Optionally, as shown in FIG. 7, the apparatus 20 further includes the memory 22, and the memory 22 is configured to store the computer program or the instructions and/or the data. The memory 22 may be integrated with the processor 21, or may be disposed separately. Optionally, there are one or more memories 22.

Optionally, as shown in FIG. 7, the apparatus 20 further includes a transceiver 23, and the transceiver 23 is configured to receive and/or send a signal. For example, the processor 21 is configured to control the transceiver 23 to receive and/or send the signal.

In a solution, the apparatus 20 is configured to implement operations performed by the terminal device in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should further be noted that the memory described above is intended to include, but is not limited to, these and any other appropriate type of memory.

FIG. 8 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to and connected to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement operations performed by the terminal device in the foregoing method embodiments.

For example, the logic circuit 31 is configured to implement processing related operations performed by the terminal device in the foregoing method embodiments, and the input/output interface 32 is configured to implement sending and/or receiving related operations performed by the terminal device in the foregoing method embodiments.

An embodiment of this application further provides a computer-readable storage medium. The computer-readable storage medium stores computer instructions for implementing the method performed by the device in the foregoing method embodiments.

For example, when the computer program is executed by a computer, the computer is enabled to implement the method performed by the terminal device or the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system, including the foregoing terminal device and the network device.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by software, hardware, firmware, or any combination thereof. When software is used to implement embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
generating, by a terminal device, a first data packet;
determining, by the terminal device, whether the first data packet is a last data packet in a first data packet set; and
triggering, by the terminal device, a first buffer status report BSR if the first data packet is the last data packet in the first data packet set, wherein
a data packet comprised in the first data packet set is generated by the terminal device in a first time period.

2. The method according to claim 1, wherein if the first data packet is not the last data packet in the first data packet set, the method further comprises:
determining, by the terminal device based on a preset condition, whether to trigger the first BSR; and
if the preset condition is not met, skipping, by the terminal device, triggering the first BSR; or
if the preset condition is met, triggering, by the terminal device, the first BSR, wherein
the preset condition comprises: a priority of a first logical channel to which the first data packet belongs is higher than that of a logical channel to which to-be-transmitted data belongs, or no to-be-transmitted data is buffered in any logical channel in any logical channel group.

3. The method according to claim 1 or 2, wherein duration between a first moment and a second moment is greater than a threshold, the first moment is a moment at which the last data packet in the first data packet set is generated, and the second moment is a moment at which a 1^{st} data packet in a second data packet set is generated; and
the first data packet set and the second data packet set are two adjacent data packet sets.

4. The method according to any one of claims 1 to 3, wherein before the generating, by a terminal device, a first data packet, the method further comprises:
receiving, by the terminal device, first indication information from a network device, wherein the first indication information indicates to trigger the first BSR by determining that the first data packet is the last data packet in the first data packet set.

5. The method according to claim 4, wherein the first indication information further indicates to trigger a second BSR by determining that a second data packet is a last data packet in a third data packet set; and
data comprised in the first data packet set and data comprised in the third data packet set are data of a same service type, and a data packet comprised in the third data packet set is generated by the terminal device in a second time period.

6. The method according to claim 5, wherein the service type comprises an extended reality XR service.

7. The method according to any one of claims 1 to 6, wherein the determining, by the terminal device, whether the first data packet is a last data packet in a first data packet set comprises:
determining, at a non-access stratum NAS and/or an access stratum AS of the terminal device, whether the first data packet is the last data packet in the first data packet set.

8. The method according to claim 7, wherein if the NAS and/or the AS of the terminal device determine/determines that the first data packet is the last data packet in the first data packet set, the method further comprises:
receiving, at the NAS and/or the AS of the terminal device, second indication information from an application layer of the terminal device, wherein the second indication information indicates that the first data packet is the last data packet in the first data packet set.

9. The method according to claim 8, wherein the generating, by a terminal device, a first data packet comprises:
generating, by the application layer of the terminal device, the first data packet, wherein a header of the first data packet comprises the second indication information; or
generating, by the application layer of the terminal device, the first data packet, and sending, by the application layer of the terminal device, the first data packet and the second indication information to the NAS and/or the AS of the terminal device.

10. The method according to claim 7, wherein the determining, at a NAS and/or an AS of the terminal device, whether the first data packet is the last data packet in the first data packet set comprises:
determining, at the NAS and/or the AS of the terminal device based on first information, whether the first data packet is the last data packet in the first data packet set, wherein
the first information comprises a first data packet set identifier, a total quantity of data packets in the first data packet set, and a quantity of received data packets that carry the first data packet set identifier; and
the first data packet set identifier and the total quantity of data packets in the first data packet set are comprised in a header of the first data packet.

11. The method according to any one of claims 7 to 10, wherein if the NAS and/or the AS of the terminal device determine/determines that the first data packet is the last data packet in the first data packet set, the method further comprises:
sending, at the NAS and/or the AS of the terminal device, third indication information to a media access control MAC layer of the terminal device, wherein the third indication information indicates the MAC layer of the terminal device to trigger the first BSR.

12. The method according to claim 11, wherein the triggering, by the terminal device, a first BSR comprises:
triggering, by the MAC layer of the terminal device, the first BSR in response to receiving the third indication information.

13. A communication method, comprising:
sending, by a network device, first indication information to a terminal device, wherein the first indication information indicates to trigger a first buffer status report BSR by determining that a first data packet is a last data packet in a first data packet set; and
receiving, by the network device, the first BSR from the terminal device, wherein
a data packet comprised in the first data packet set is generated by the terminal device in a first time period.

14. The method according to claim 13, wherein the first indication information further indicates to trigger a second BSR by determining that a second data packet is a last data packet in a third data packet set; and
the method further comprises:
receiving, by the network device, the second BSR from the terminal device, wherein
data comprised in the first data packet set and data comprised in the third data packet set are data of a same service type, and a data packet comprised in the third data packet set is generated by the terminal device in a second time period.

15. The method according to claim 14, wherein the service type comprises an extended reality XR service.

16. A terminal device, wherein the terminal device comprises a processor and a memory, the processor is coupled to the memory, the memory is configured to store a computer program, and when the processor runs the computer program, the terminal device is enabled to perform the method according to any one of claims 1 to 12.

17. A network device, wherein the network device comprises a processor and a memory, the processor is coupled to the memory, the memory is configured to store a computer program, and when the processor runs the computer program, the network device is enabled to perform the method according to any one of claims 13 to 15.

18. A computer-readable storage medium, wherein the computer-readable storage medium stores computer instructions, and when the computer instructions are run on a terminal device, the terminal device is enabled to perform the method according to any one of claims 1 to 12; or when the computer instructions are run on a network device, the network device is enabled to perform the method according to any one of claims 13 to 15.

19. A computer program product, comprising computer instructions, wherein when the computer instructions are run on a terminal device, the terminal device is enabled to perform the method according to any one of claims 1 to 12; or when the computer instructions are run on a network device, the network device is enabled to perform the method according to any one of claims 13 to 15.

20. A chip, wherein the chip comprises a processor and a communication interface, the processor reads and runs instructions through the communication interface, and when the chip is installed in a terminal device, the terminal device is enabled to perform the method according to any one of claims 1 to 12; or when the chip is installed in a network device, the network device is enabled to perform the method according to any one of claims 13 to 15.

21. A communication system, wherein the communication system comprises a terminal device and a network device, wherein the terminal device is configured to perform the method according to any one of claims 1 to 12, and the network device is configured to perform the method according to any one of claims 13 to 15.
